# EUROPEAN PATENT SPECIFICATION

(11) **EP 0 270 629 B1**
(45) Date of publication and mention of the grant of the patent: **24.03.1993**
(21) Application number: 87903922.0
(22) Date of filing: 12.06.1987
(51) Int. Cl.: A01K 15/02

(54) **MEANS FOR EXERCISING DOGS FROM A BICYCLE**
MITTEL ZUR UEBUNG VON HUNDE VON EINEM FAHRRAD HINAUS
DISPOSITIF POUR PROMENER UN CHIEN LORSQU'ON CIRCULE EN BICYCLETTE

(30) Priority: 17.06.1986 NO 862400; 13.02.1987 NO 872339
(43) Date of publication of application: 15.06.1988
(73) Proprietor: ARNTZEN, Sven, N-1281 Oslo 12 (NO)
(72) Inventor: ARNTZEN, Sven, N-1281 Oslo 12 (NO)
(74) Representative: Barlow, Roy James
(86) International application number: PCT/NO87/00047
(87) International publication number: WO 87/07834

(56) References cited:
- US-A- 4 134 364

## Description

Many people have difficulties in exercising their dogs properly by walking or running. To walk with a dog does not give the dog sufficient exercise unless one walks for a long time. This is for many people monotonous, boring, and to run with the dog is for many people too exhausting.

One solution may be to cycle with the dog. Cycling is easier than running, it is varied and it gives better speed and consequently better exercise than walking or running with the dog. Cycling gives in addition a more interesting alternative since one rides easily over greater distances and gets a more varied exercise for the dog.

It is, however, dangerous or risky to cycle with a dog on a leash. The dog may suddenly stop and topple the cyclist or force the rider to let go of the leash. Merely a small pull from the dog may displace the handlebars of the of the bicycle if one keeps the hand with the leash on the handlebars. If the leash is held freely, one can release, but loses control of the bike, loses the dog, or both.

One can also for example tie the leash to the luggage-carrier, but if the dog suddenly stops while the leash is loose, a sudden, strong tightening of the leash may cause the dog serious injuries, often of a "hanging" nature.

Finally, by such manipulation of the leash one loses control of the dog since the leash may also become entwined in the pedals or wheels of the bike, or the dog may run into the street and become injured.

The present invention, which concerns a means for exercising animals from a bicycle, keeps the dog in place on the required side of the bicycle. The dog is in a position where the owner can see it at all times. The rider (the dog owner) has both hands and feet free to operate the bike.

Using the present invention avoids the need for an extensive line or leash which may become entwined in the bike. By fastening the leash above the dog, one avoids the possibility of the dog stumbling in the leash.

The dog exercising means according to the present invention is intended to be fastened so low that the moment arm from the fastening means to the contact point between the bike and the ground may have a minimal effect for toppling the bike or bringing the bike out of control. The resilient arm of the exercising means is able to provide a continuously increasing tightening impulse on the leash so that the dog learns to run "in place" (e.g. to heel) and is in addition not hurt, nor is the bike toppled if the dog "forgets" and makes a sudden stop.

US-A-4134364 discloses a means for exercising dogs, for mounting on a bicycle, comprising means mounted on a frame and supporting a stand in a first position. Claim 5 of US-A-4134634 specifies that the horizontal stand-off bar is flexible to accommodate overloads.

The means disclosed in US Patent No. 4134364 is for exercising dogs from preferably a tricycle. However, such a stand, as disclosed therein has several drawbacks as compared to the present invention, and does not describe any resilient means to correct the dog such as does the present invention.

Figures 1 to 4 of US-A-4134364 disclose a stand-off device for mounting on a bike for exercising dogs, said device comprising a fastening means for fastening on the bicycle frame, an arm secured to the fastening means, and a leash-securing means connected to the first arm by a safety device (48,50) adapted to release at a certain load.

Figures 5 and 6 of US-A-4134364 disclose a stand-off device for mounting on a bike for exercising dogs, said device comprising a fastening means for fastening on the bicycle frame, a first arm (25) secured to the fastening means, a second arm (76) including a device at its end for securing a leash for a dog, and a safety device (48,50) adapted to release it at a certain load to release the dog from the bike.

Many people want to try to cycle with a dog, but insecurity before the dog is trained in running "in place" causes them to not dare starting. The means according to the present invention makes it so easy and safe to cycle with a dog that most people ought to be able to try.

The invention also aims to make exercising dogs more fun and easier and to provide the dog with a more effective form of exercise. In addition the invention improves the health condition of the dog and is pedagogic since it teaches the dog to walk and run "in place" in an effective and lenient way.

The principal features of the invention are set out in claim 1.

The invention will be described below with reference to the accompanying Figures, in which:-
FIGURE 1 shows one embodiment of the device according to the invention, in cross-section;
FIGURE 2 shows the embodiment of Figure 1, but from another angle; and
FIGURE 3 shows an exploded view of one form of the fastening means of the device of another embodiment of the invention.

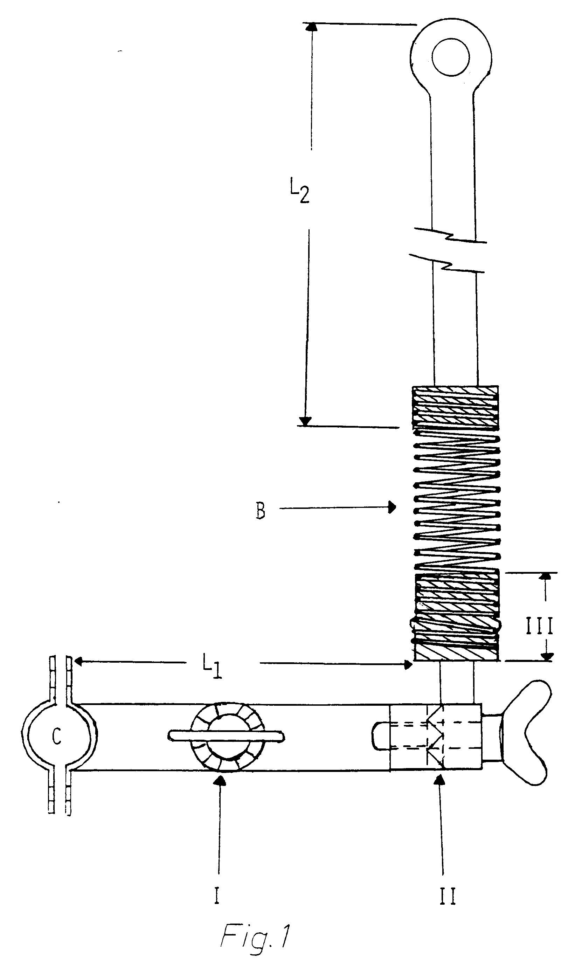

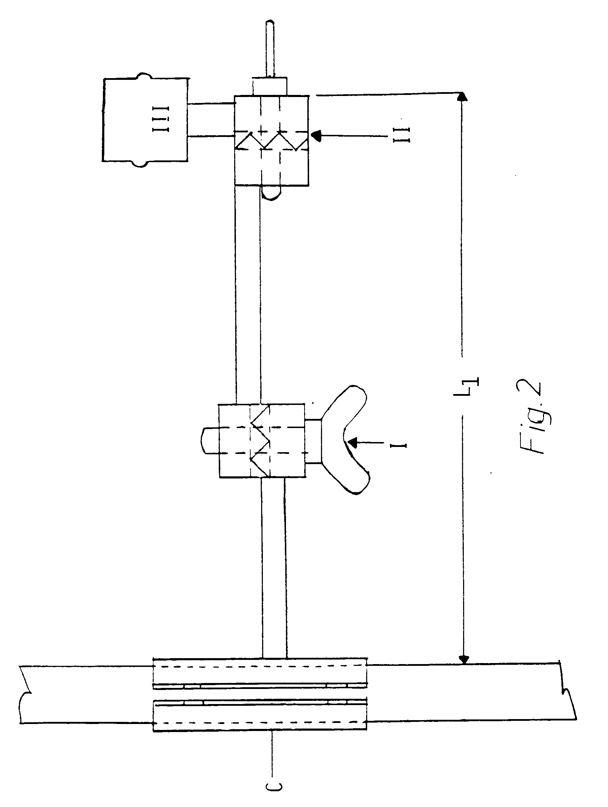

The device according to the invention is fastened, for instance by means of a bracket (c), to the frame of the bike at an appropriate place out of the way of the pedals and preferably as close to the ground as possible. The two parts of the arm (L₁) which projects outwards from the bike, may, in the embodiment depicted in Figures 1 and 2, be adjusted by means of an adjustment joint (I) in a plane perpendicular to the length axis of the bike to regulate the inclination of the second (vertical) arm (L₂) thereby deciding the lateral spacing between the running dog and the bike. The second arm (L₂) is fastened to the first arm (L₁) through a resilient means (B) such as a spring, and a fastening device (III). The inclination of the arm (L₂) in a plane parallel to the longitudinal axis of the bike, may be adjusted by means of an adjustment device (II) such as a clampable rotary joint. The lengths of the arms L₁ and L₂ are adjusted to the frame size of the bike, and the resilience/strength of the spring B is adjusted to the size of the dog that is to be exercised. The spring B is thus, in one embodiment of the device, adjustable or removable so as to be able to be adjusted to the needs and preferences of the user and to be easy to replace in case of damage.

In one embodiment, the device according to the invention may be supplied with a fastening device III in the form of a safety device which frees the spring B from the first arm L₁ at a certain load.

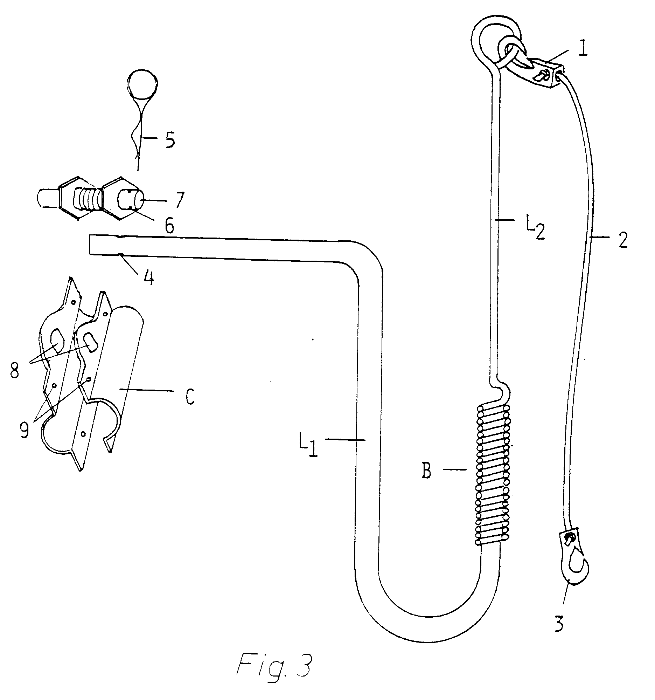

Another safety device may consist of a key-ring fastened to the end 1 or 3 (Figure 3) of the leash 2. Such a ring is deformed at a certain load, and may thus free the dog and prevent it from being "hanged".

In another embodiment of the device according to the invention, the adjustment joints I and II may be replaced by a single, adjustable joint, possibly of a ball type, to combine the degrees of freedom of the joints I and II. Such a joint (not shown in the Figures) may be placed on the first arm L₁.

In another embodiment of the stand according to the invention, as depicted in Figure 3, the means comprises as in the first embodiment a fastening bracket C. However, in this alternative embodiment the arm part L₁ has an S-like shape where the total arm part is rigid. In this embodiment the safety-device III is, however, omitted, while the resilient part B and the second arm L₂ may in this embodiment be made of one single part. The distal part of the arm L₂ may for example be formed as a ring to receive a carabine-hook from the leash of the dog. In the embodiment depicted in Figure 3, such a fastening leash comprises a first carabine-hook 1 for fastening in the ring part of the arm L₂. The carabine-hook 1 may be fastened to a rubber band or other elastic device 2, and this band is equipped at its distal end with another fastening device, inter alia a carabine-hook 3, to be secured to the collar of the dog.

To facilitate the demounting of the means according to the invention, the first arm L₁ may be tubular and may, in the part which is most distant from the resilient part B, be equipped with a hole 4 to receive a split pin clip 5. A corresponding hole 6 is drilled in a fastening bolt 7, and the size of the fastening bolt 7 is adapted to fit tightly in the tubular arm L₁. The fastening bracket C is in its turn equipped with screw- or bolt-holes (9) to receive fastening bolts or screws (not shown). The fastening bracket C may also be equipped with a rubber lining (not shown) to protect the frame of the bike.

The means according to the invention may be made of any convenient material, such as galvanized steel or synthetic material, so as to be easy to mount and to not contribute significantly to the weight of the bike. It should also be easy to repair in case of damage.

A preferred fastening arrangement for the stand according to the invention comprises a support prop which may be fastened at one end on the fastening bolt 7 for example by means of an eye bolt the eye of which conforms to the fastening bolt 7, for which purpose the bolt 7 may be given an oblong cross-section, and which at its rearmost end comprises a W-shaped fastening bracket for securing to the bike frame on the two rear stays which descend to the back wheel from the seat. Such a fastening prop will better prevent the stand according to the invention from being rotated about the bike frame down tube under load. Such a prop is, however, not essential for the use of the stand according to the invention.

As previously mentioned the stand according to the invention may be equipped with safety devices for freeing the dog from the bike. Such a safety device may consist of the above described key ring or of any other means which is capable of freeing the dog instantly. Such a device may be placed between the ring part of the stand arm L₂ and the carabine-hook 1, or between the collar of the dog and carabine hook 3, or at both places. This will prevent the dog from being "hanged" in case the animal should run on the "wrong" side of an obstacle, or if the leash should become entwined in an object by the roadside. Such a safety device should free the dog at a certain load, and should operate instantaneously. By placing such a device at both carabine hooks 1 and 3, both the rider and the animal will be secure, since firstly the bike will be freed in case the leash should become stuck in a stationary object such as a tree and thereby prevent the rider from losing control of the bike, and secondly the dog will be freed and thereby prevent the previously mentioned "hanging" of the dog.

## Claims

1. A stand-off device for mounting on a bike for exercising dogs, said device comprising a fastening means for fastening on the bicycle frame; a first arm (L; 11) secured to the fastening means; a safety device adapted to release at a certain load; and, connected to the first arm, a second arm (B, L₂; 12, 13) which is equipped at its end portion with a device for securing a leash (2) for a dog, said second arm being resilient for deflection to correct the dog.

2. A device according to claim 1, characterised in that the resilient arm (B, L₂; 12, 13) comprises a helical spring.

3. A device according to claim 1 or 2, characterised in that between the first arm (11) and the resilient arm (12, 13) there is included a U-shaped part (14) extending sideways from the first arm.

4. A device according to claim 3, characterised in that the resilient arm (12, 13) is secured to the end of the U-shaped part (14).

5. A device according to any one of claims 1 to 3, characterised in that the resilient arm (B, L₂) is secured on a fastening device (III) which is releasably positioned on the first arm (L₁).

6. A device according to any one of claims 1 to 5, characterised in that the first arm (L₁; 11) is tubular at least in its end and fits a securing bolt (7), said tubular end and said securing bolt (7) being equipped with through-going and mutually conforming apertures (4, 6) for a diametral securing clip (5).

7. A device according to any one of claims 1 to 6, characterised in that the releasable safety device comprises at least one ring adapted to deform at a certain load.

## Patentansprüche

1. Abstandsvorrichtung zur Anbringung an einem Fahrrad zum Trainieren von Hunden, wobei die Vorrichtung eine Befestigungseinrichtung zur Befestigung am Fahrradrahmen umfaßt; einen ersten Arm (L; 11), der an der Befestigungseinrichtung angebracht ist; eine Sicherheitseinrichtung, die bei einer bestimmten Last löst; und einen mit dem ersten Arm verbundenen zweiten Arm (B, L₂; 12, 13), der an seinem Endbereich mit einer Vorrichtung zum Anbringen einer Leine (2) für einen Hund versehen ist, wobei der zweite Arm elastisch ist und sich zur Korrektur des Hundes durchbiegt.

2. Vorrichtung nach Anspruch 1, dadurch gekennzeichnet, daß der elastische Arm (B, L₂, 12, 13) eine Spiralfeder umfaßt.

3. Vorrichtung nach Anspruch 1 oder 2, dadurch gekennzeichnet, daß sich zwischen dem ersten Arm (11) und dem elastischen Arm (12, 13) ein U-förmiger Teil (14) befindet, der sich seitwärts vom ersten Arm aus erstreckt.

4. Vorrichtung nach Anspruch 3, dadurch gekennzeichnet, daß der elastische Arm (12, 13) am Ende des U-förmigen Teils (14) angebracht ist.

5. Vorrichtung nach einem der Ansprüche 1 bis 3, dadurch gekennzeichnet, daß der elastische Arm (B, L₂) an einer Befestigungsvorrichtung (III) angebracht ist, die sich lösbar am ersten Arm (L₁) befindet.

6. Vorrichtung nach einem der Ansprüche 1 bis 5, dadurch gekennzeichnet, daß der erste Arm (L₁; 11) wenigstens an seinem Ende röhrenförmig ist und auf einen Sicherungsbolzen (7) paßt, wobei das röhrenförmige Ende und der Sicherungsbolzen (7) mit durchgehenden und miteinander übereinstimmenden Öffnungen (4, 6) für eine Durchmesser-Sicherungsklammer (5) versehen sind.

7. Vorrichtung nach einem der Ansprüche 1 bis 6, dadurch gekennzeichnet, daß die lösbare Sicherheitsvorrichtung wenigstens einen Ring umfaßt, der bei einer bestimmten Last verformt wird.

## Revendications

1. Dispositif de maintien à distance destiné à être monté sur une bicyclette pour promener des chiens, ledit dispositif comprenant un moyen d'attache pour l'attacher au cadre de la bicyclette ; un premier bras (L; 11) fixé au moyen d'attache; un dispositif de sécurité adapté pour se libérer sous une certaine charge; et, connecté au premier bras, un second bras (B, L₂; 12, 13) qui est équipé à son extrémité d'un dispositif pour fixer une laisse (2) pour un chien, ledit second bras étant élastique pour neutraliser la déviation du chien.

2. Dispositif selon la revendication 1, caractérisé en ce que le bras élastique (B, L₂; 12, 13) comprend un ressort hélicoïdal.

3. Dispositif selon la revendication 1 ou 2, caractérisé en ce que, entre le premier bras (11) et le bras élastique (12, 13), une pièce (14) en forme de U est incluse, s'étendant latéralement depuis le premier bras.

4. Dispositif selon la revendication 3, caractérisé en ce que le bras élastique (12, 13) est fixé à l'extrémité de la pièce (14) en forme de U.

5. Dispositif selon l'une quelconque des revendications 1 à 3, caractérisé en ce que le bras élastique (B, L₂) est fixé sur un dispositif (III) d'attache qui est positionné de façon détachable sur le premier bras (L₁).

6. Dispositif selon l'une quelconque des revendications 1 à 5, caractérisé en ce que le premier bras (L₁; 11) est tubulaire au moins à sons extrémité et s'adapte à un boulon (7) de fixation, ladite extrémité tubulaire et ledit boulon (7) de fixation étant équipés d'ouvertures traversantes et mutuellement adaptées (4, 6) pour une barrette diamétrale (5) de fixation.

7. Dispositif selon l'une quelconque des revendications 1 à 6, caractérisé en ce que le dispositif de sécurité libérable comprend au moins un anneau adapté pour se déformer sous une certaine charge.
